# EUROPEAN PATENT SPECIFICATION

(11) **EP 2 597 460 B1**
(45) Date of publication and mention of the grant of the patent: **20.03.2019**
(21) Application number: 11190383.7
(22) Date of filing: 23.11.2011
(51) Int. Cl.: G01N 30/06, G01N 30/08, G01N 30/56, G01N 30/46

(54) **High pressure guard column**
Hochdruck-Vorsäule
Colonne de protection à haute pression

(43) Date of publication of application: 29.05.2013
(73) Proprietor: Agilent Technologies, Inc., Santa Clara, CA 95051 (US)
(72) Inventor: Von Doehren, Norwin R.L., 44617LE Bergen op Zoom (NL); Heringa, Menno, 4333KZ Middelburg (NL)
(74) Representative: Grünecker Patent- und Rechtsanwälte PartG mbB

(56) References cited:
- EP-A1- 1 750 125
- EP-A2- 0 206 003
- US-A1- 2002 185 441
- US-A1- 2005 224 414
- US-A1- 2010 224 543

## Description

### BACKGROUND OF INVENTION

### Field of the Invention

The present application relates generally to the field of guard columns for high-pressure liquid chromatography (HPLC). Guard columns are generally used to protect HPLC columns from physical or chemical contamination.

### Background Art

High-pressure liquid chromatography (HPLC) is a process used for separating one or more compounds from a chemical mixture. The HPLC process consists of passing the mixture through a stationary packing material, under the influence of a high-pressure transport liquid, and separating the compounds by selective affinity, sieving, absorption or partition. The packing is typically housed within a thru-bored section of a body of a column and is typically held in place by frits (or filters) at both ends of the body.

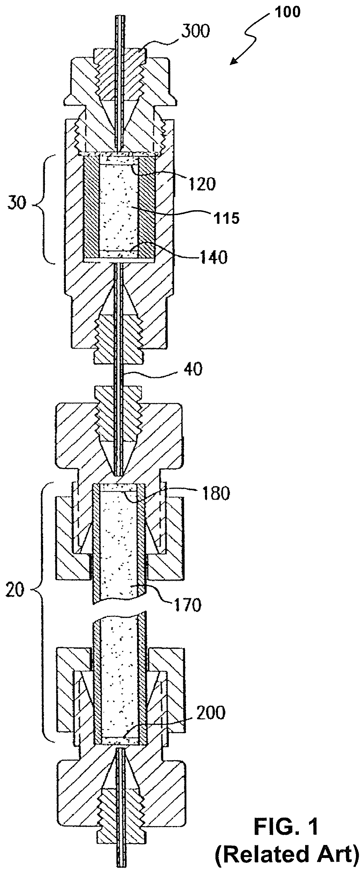

FIG. 1 illustrates a conventional HPLC apparatus (column) 100, wherein a chemical mixture is injected into the HPLC apparatus 100 from an inlet 300. The mixture first passes through a guard column 30, which includes frits 120, 140 and packing material 115. Then, the mixture flows through a connector 40 located between the guard column 30 and an HPLC column 20. From that point, the mixture flows through inlet frit 180, packing material 170, and outlet frit 200 of the HPLC column 20, and the components of the mixture can then travel through an exit after which they can be measured, collected, redirected or disposed of.

The uniformity of the packing material 170 in the column 20 has a significant impact on column performance. It is desired that the packing material 170 be perfectly arranged and completely homogeneous in the column 20 so that the mobile phase and the sample mixture move through the column 20 at uniform rates. Areas of loose packing material 170 would create channels with locally increased flow rates, while areas with particle aggregation (or very tight packing) may cause eddy flows. These local variations in flow rates due to non-uniform packing would result in undesired mixing that would degrade column performance leading to broadening of the peaks, thereby decreasing the resolving capability of the column 20.

Columns for HPLC are packed with packing materials at very high pressures, typically several times the operating pressures of the columns. Under such high pressures, the columns will expand radially, albeit only slightly. Upon completion of the packing, the high pressure is removed and the column is allowed to relax and contract radially to its nominal diameter. This places the packing material under compression. As a result, the hydraulically oriented layers of packing material may buckle and shift in response to the change in the diameter of the column. The buckling disrupts the uniformity of the layers and adversely affects column performance.

To overcome this problem, U.S. patent No. 7,588,683 issued to Willis et al discloses LC columns with adjustable compression, in which one of the frit is fitted inside the column and a piston is pressed against this frit. Similarly, U.S. Patent No. 7,399,410 issued to Izzo et al. discloses a filter assembly that protrudes into a column to compresses the packing materials in the column.

Another approach to counter this packing problem is disclosed in EP 2315022 A1, in which a frit assembly with a compressible ring is pressed against a protruding ring on the end of a column to force the frit to sink into the column to provide compression on the packing material. The frit assembly with a compressible ring is similar to that disclosed in U.S. Patent No. 6,527,951 issued to Tuvim.

In addition to the Liquid Chromatography (LC) columns, guard columns used in LC systems may also impact the overall performance of the systems. However, guard columns are disposable (e.g., discarded after certain number of uses or when back pressure rises noticeably) and they account for a small percentage of the overall fluid volume in an LC system. Therefore, not as much attention has been paid to the performance of guard columns in the past.

With ever increasing demands for better performance in analytical LC, newer techniques use higher pressures and smaller particle sizes (e.g., fast LC or ultra high performance liquid chromatography (UHPLC)). These systems demand high performance from every part in the systems, including the guard columns.

Guard columns for LC systems may comprise guard column cartridges that are used inside guard column housings. Examples of guard columns or cartridges include MetaGuard® from Agilent Technologies, vanGuard® pre-columns from Waters Corporation, and Opti-Guard® from Optimize Technologies. Pre-made cartridges are convenient and cost effective. However, these cartridges do not address the potential issues with the packing materials inside the cartridges and mechanical stabilities of the packing materials inside these cartridges may not be sufficient for long-term use.

U.S. Patent No. 5,863,428 issued to Ma et al. discloses a guard cartridge with a porous sheet covering the cartridge. The cartridge is placed on a frit located on top of a column or in an end fitting during use. Thus, the cartridge does not include a frit and is more cost-effective to manufacture. However, the mechanical stability of the packing materials in the cartridges may not be desirable.

EP 0 206 003 A1 relates to a liquid chromatography column apparatus which utilizes sorbent packing material in a tube having a first end portion and a second end portion. The first end portion of the tube includes a plug having a passage therethrough. The plug fits in the tube adjacent to the packing material and is moveable within the tube. The plug may include a stopper and a seal retainer in end-to-end configuration, wherein the stopper can exert pressure on packing material when a manually actuable gear mechanism, incorporated in the end fitting on the first end portion of the tube, exerts an axial force along the tube, which in turn compresses the packing material in the tube.

US 2010/224543 A1 discloses a fitting assembly for quick connections and disconnections of components in liquid chromatography systems. The fitting assembly comprises a double-headed ferrule, a nut and a fitting, all having passageways therethrough for receiving and removably holding a tubing. The nut includes a first and a second end, with the second end having an internally tapered portion adapted to receive the first end of the ferrule. A fitting includes a first end having an internally tapered portion adapted to receive the second end of the ferrule and a second end adapted to be removably connected to a component or fitting of a liquid chromatography system.

In view of the above, there remains a need for guard columns that have improved performance. In particular, it would be desirable to have improved mechanical stability of the packing materials in the guard columns such that the useful lives of the guard columns can be extended.

### SUMMARY OF INVENTION

Embodiments of the present invention provide guard columns, wherein the packing materials in the guard columns are under compression, and methods for packing such columns. Compression of packing materials in the guard columns is achieved by using filter elements that include polymeric materials in the peripheral regions of the filter elements such that center filter regions of the filter elements can be pushed into guard column (i.e., the chambers holding the packing materials) to compress the packing materials.

One aspect of the invention relates to guard column assemblies for chromatography as defined in claim 1. A guard column assembly in accordance with one embodiment of the invention includes: a housing having an inlet and an outlet; and a guard column configured to be enclosed in the housing, wherein the guard column includes: a tubular body having an axial bore; and a first filter and a second filter disposed at a first end and a second end of the tubular body to define a chamber for holding a packing material, wherein the first filter comprises a disk-shaped filter element having a peripheral region coated or covered with a polymeric material and a center filter region for fluid passage, wherein the disk-shaped filter element has an outside diameter equal to or larger than an outside diameter of the first end of the tubular body and the center filter region of the disk-shaped filter element has a diameter smaller than an inside diameter of the first end of the tubular body, wherein the housing encloses the guard column in a manner that presses the first filter and the second filter, respectively, against the first end and the second end of the tubular body such that the packing material in the chamber is compressed. The second filter may also comprise a similar filter element. Alternatively, the second filter may be fixedly attached to the second end of the tubular body.

According to another embodiment of the invention, a guard column is as described above, but is further characterized in that at least one of the first end and the second end of the tubular body is chamfered on an inside edge and/or an outside edge.

According to another embodiment of the invention, a guard column is as described above, but is further characterized in that it further comprises at least one filter retainer disposed between the housing and at least one of the first filter and the second filter. The filter retainer may be an integral part of the housing.

According to another embodiment of the invention, a guard column is as described above, but is further characterized in that the housing comprises a female section and a male section. The female section and the male section are connected by thread engagement, compress fit, or other mechanisms.

According to another embodiment of the invention, a guard column is as described above, but is further characterized in that it further comprises a connector at the outlet of the housing for attachment to a chromatography column.

Another aspect of the invention relates to the methods for assembling a guard column assembly for chromatography of claim 1 or 2. According to one embodiment of the invention, a method includes the steps of: filling the tubular body of the guard column with the packing material via a first end of the tubular body, while a second end of the tubular body is closed by the second filter; placing a first filter over the first end of the tubular body; and assembling the housing to enclose the guard column in a manner that the housing presses the first filter against the first end of the tubular body such that the packing material in the chamber is compressed.

Other aspects and advantages of the invention will be apparent from the following description and the appended claims.

### BRIEF DESCRIPTION OF DRAWINGS

FIG. 1 shows an HPLC column for an HPLC system, having a guard column connected to an analytical column.
FIG. 2 shows a schematic illustration of a guard column in accordance with one embodiment of the invention.
FIG. 3 shows a filter element in accordance with one embodiment of the invention.
FIG. 4 shows an assembled guard column in accordance with one embodiment of the invention illustrating the compression of the packing material.
FIG. 5A shows a guard column in accordance with one embodiment of the invention illustrating various dimensions of the filter element relative to the guard column body diameters.
FIG. 5B shows a guard column in accordance with one embodiment of the invention having a different configuration of the guard column body.
FIG. 5C shows a guard column in accordance with one embodiment of the invention having a different configuration of the guard column body.
FIG. 6 shows a guard column in accordance with one embodiment of the invention having a second filter fixedly attached to the second end of a guard column body.

### DETAILED DESCRIPTION

Embodiments of the invention relate to guard columns for use in liquid chromatography, particularly HPLC, fast LC and ultra high performance LC (UHPLC). Guard columns of the invention have improved mechanical stability of the packing materials. Specifically, guard columns of the invention are designed with mechanisms to compress the packing beds such that voids or other disturbance of the packing beds are less likely to develop. As a result, these guard columns would not adversely impact the analytical column performance and would have increased useable lives.

Guard-columns provide physical (filtration) and chemical (adsorption) protection for LC columns. They are packed with suitable packing materials, which are often the same as the packing materials used in the LC columns that are to be protected, to provide effective protection. Guard columns have traditionally been viewed as disposable devices and not much attention has been paid to the optimization of their performance. With increasing demand for higher performance of chromatography systems, the operational pressures have increased and columns with smaller particles have been developed. With smaller particles and higher pressures, the conditions of packing beds inside guard columns may impact overall system performance. In particular, one would like to minimize the extra column effects (void volume) when the particles are small.

Guard column performance depends in part on the physical attributes of the packing bed (stationary phase). Problems can arise due to pressure changes leading to packing bed disturbance or dead spaces (voids) within the packing material. If voids develop in a guard column, it may cause the sample peaks to trail or broaden. Even though the impact of a guard column on a conventional HPLC system is relatively small, the performance impact of a poor guard column on a higher pressure system (e.g., an UHPLC system) may be noticeable.

Similar to LC columns, loss of stability or uniformity in the packing material in guard columns may be caused by a number of factors, such as a poorly designed column packing process, a subsequent column assembly step that allows the density of the packing bed to be reduced, or subsequent use of the column in which the high-pressure fluid flow required for the LC technique destabilizes the packing bed.

The problem of providing a uniform, stable packing bed for an analytical column has been addressed in a few ways. In PCT App. Pub. No. WO 2004/024285, an LC column is taught in which a preformed filter assembly at the inlet end has a filter that includes a protruding portion. When the filter assembly is installed, the filter protrudes into the interior of the column where the packing bed is located to attain some compression of the packing bed. In UK Patent App. Pub. No. GB 2 429 939, an LC column is taught in which a metal filter is press-fitted into the open end of the column tube. Upon installation of an end fitting of the column, a metal compression body bears against the end of the tube of the column, which deforms the end of the tube. As the end of the tube yields in this manner, the compression body contacts the filter and causes the filter to bear against the packing bed to attain compression thereof.

In published European application No. EP 2315022 A1, a column tube with an annular protrusion is used with a frit assembly having a ring surrounding a frit, wherein the frit assembly has a frit opening having an inner diameter less than the inner diameter of the annular protrusion and a polymer ring having an outer diameter greater than an outer diameter of the annular protrusion and a yield strength less than a yield strength of the annular protrusion. When the end fitting is securely fastened to the column tube, the ring is axially compressed by the annular protrusion, and the ring is deformed around the annular protrusion. As a result, the frit is forced a short distance into the chamber holding the packing material in the column, thereby compressing the packing material. The compression helps to minimize the possibility of void formation and thus improves the useable lifetime of the column.

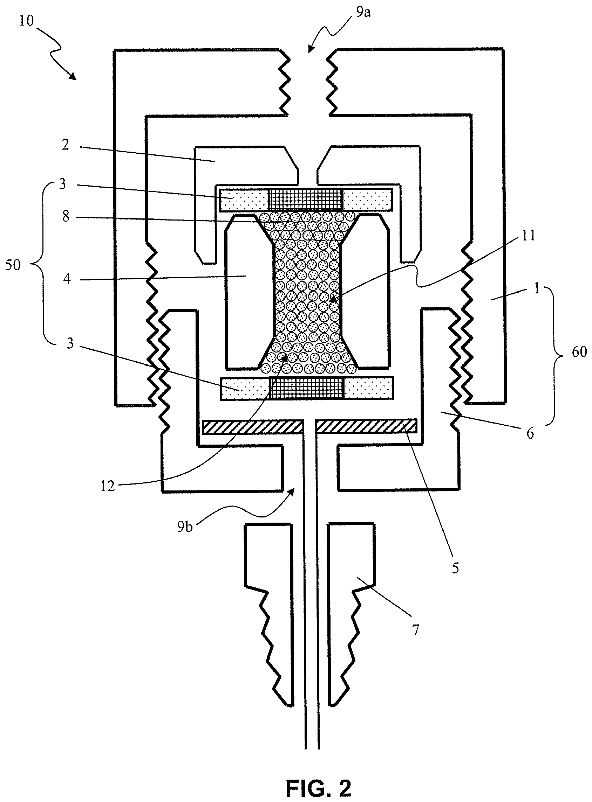

In the present invention, however, the inventors have designed guard columns using unique filter elements to provide compression on packing materials inside guard columns. FIG. 2 shows a schematic illustration of a guard column assembly 10 in accordance with one embodiment of the invention. Note that the dimensions shown are for clarity of illustration. One skilled in the art would appreciate that the gaps (distances between the parts) may not exist in the assembled guard column assembly 10 and that various sizes, shapes, and relative dimensions may be changed without departing from the scope of the invention.

As shown in FIG. 2, the guard column assembly 10 includes a guard column housing 60 that encloses a guard column 50. The guard column assembly 10 may be connected to a sample injector (not shown) and/or a solvent pump/reservoir (not shown) via an inlet 9a and to an analytical column (not shown) via an outlet 9b using a capillary adaptor 5 and a connector 7. The use of a capillary adaptor 5 can minimize the dead volume. However, its use is not necessary. In accordance with other embodiments of the invention, the capillary adaptor 5 and connector 7 may be replaced with any other suitable connections known in the art for connecting a guard column to an analytical column.

In the example shown in FIG. 2, the guard column housing 60 comprises a female guard housing 1 and a male guard housing 6. The guard housing 60 may be made of any suitable materials that could provide sufficient strength for high pressure applications. Preferably, the guard housing 60 are made of a metal (e.g., titanium), steel (e.g., stainless steel), an alloy, or a polymer (e.g., polyether ether ketone (PEEK)). The female guard housing 1 and the male guard housing 6 may engage each other to form the guard column housing 60 by any means known in the art, such as thread engagement, compression fit (press fit), or other mechanisms. In accordance with preferred embodiments, the female guard housing 1 and the male guard housing 6 are made up by thread engagement.

The guard column 50, which is enclosed in the guard column housing 60, comprises a guard column body (or tubing) 4 having a center bore 11 for holding packing materials 8. The guard column body 4 comprises a tubular body and the center bore 11 is an axial bore - i.e., a channel bored along the axis of the tubular body and through both ends of the tubular body. Both the tubular body 4 and the center bore 11 preferably have a cross section (in the direction perpendicular to the axis of the tubular body) that is round in shape. However, other shapes of cross sections (e.g., oval, polygonal, etc.) may be adopted without departing from the scope of the invention. The guard column body 4 in this example is closed at the two axial ends by two filter elements 3 to form a chamber 12 for holding the packing material 8. The guard column body 4 may be made of any suitable material, such as a polymer (e.g., PEEK or a fluorocarbon polymer), a metal (e.g., titanium), a steel (e.g., stainless steel), or an alloy.

The packing materials 8 can be any suitable packing materials for the desired applications. One skilled in the art would appreciate that the choice of packing materials would depend on the types of columns to be protected by the guard column. In general, the packing material of a guard column is selected to be the same as or of a similar type of the packing material used in the LC column (which can be an analytical column, a semi-preparative column, or a preparative column). Examples of packing materials include silica-based reversed phase packing materials, core shell particles, ion exchange resins, etc.

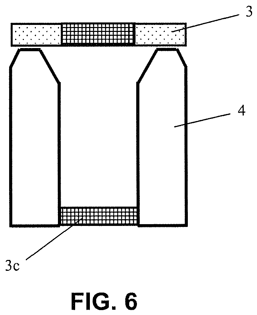

The chamber 12 for holding the packing material 8 in the guard column 50 is defined by the two filter elements 3 and the center bore 11 of the guard column body 4 in the assembled guard column 50. Although the two filter elements 3 are shown to be identical in this example, in accordance with other embodiments of the invention, different filter elements may be used for the top and bottom ends. Furthermore, one of the filter elements may be omitted and a filter or frit may be made as a part of or an integral part of the guard column body 4. For example, the bottom filter may be different from the top filter and the bottom filter may be an integral part at the bottom opening of the guard column body 4 (see FIG. 6).

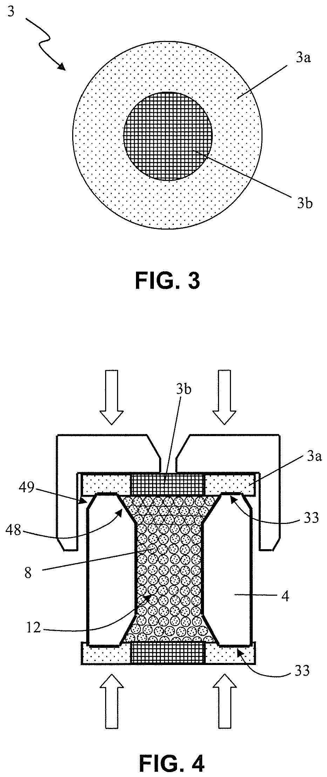

The term, "frit" and "filter" are used interchangeably in this description. A "filter" or "frit" as used herein has its common meaning, i.e., some means for retaining particles and allowing fluids to pass. A filter can be a simple filter or a "filter element," which as used herein means a filter having a coating or a ring of a plastic or polymer (a "polymeric material") in its peripheral region and leaving a "center filter region" uncoated or uncovered for fluid passage. A "polymeric material" as used herein refers to an elastomer, a rubber, a plastic, or a polymer. A "peripheral region" of a filter element refers to a ring shaped area (or a band of other shapes, such as oval or polygonal) around the periphery of the disk shaped filter element. An example of a peripheral region is illustrated as 3a in FIG. 3. A "center filter region" refers to the center region that is not coated or covered by a polymeric material such that the filter can allow fluids to pass. An example of a "center filter region" is illustrated as 3b in FIG. 3.

The structure of a filter element in accordance with embodiments of the invention is shown in FIG. 3, which shows a top view of the filter element 3. As shown, the filter element 3 comprises a center filter region 3b and a peripheral region 3a. The center filter region 3b may comprise a conventional frit (e.g., a metal frit or other sintered frit) to allow a fluid to pass through and to retain the packing materials, while the peripheral regions 3a is coated or covered with a polymeric material.

The polymeric materials may be any elastomers, rubbers, polymers, or plastics that are inert to the solvents to be used and have yield strengths lower than the yield strength of the materials used to make the guard column tube (body) 4. The lower yield strength requirement is such that it will yield (indent) when pressed against ends of the guard column body, as shown in FIG. 4. In accordance with embodiments of the invention, the polymeric material is preferably PEEK (polyether ether ketone) or a fluorocarbon polymer. Many suitable fluorocarbon polymers, such as PTFE (polytetrafluoroethylene), PFA (perfluroalkoxy), FEP (fluorinated theylene propylene) or PVDF (polyvinylidene fluoride), are commercially available. A preferred fluorocarbon polymer is sold under the trademark Teflon® (polytetrafluoroethylene) by DuPont.

As shown in FIG. 3, a filter element 3 comprises a circular filter that is coated at its peripheral with a polymeric material 3a, leaving a center filter region 3b for passing fluids. The filter elements may be formed of stainless steel screen, sintered stainless steel frit, or a membrane. The membrane material would need to be inert to the solvent and possess sufficient strength with pores specific to the needed size. In preferred embodiments, the filters may be fabricated from a stainless steel screens or sintered stainless steel frits that are capable of trapping particles as small as approximately 2 microns, or approximately 1 micron for particles smaller than 2 microns (as in UHPLC applications). For example, a filter may have pore sizes of 1 micron, 0.5 micron, or 0.3 micron. The filter may be a stamped circular section of stainless steel screen having a thickness of between 50 and 500 microns, preferably between 100 and 150 microns.

The polymeric material (e.g., plastic or polymer) in the peripheral region 3a of a filter element 3 may be applied, on one surface or both top and bottom surfaces of the filter, in any manner known in the art. For example, the application of the plastic or polymer to the periphery of a filter may be performed with the aid of a mask placed in the center region. After the coating is applied, the mask is removed to expose the center filter region 3b. Alternatively, the entire filter may be coated or covered with a plastic or polymer, and a center region is then removed, leaving a center filter region 3b open for fluid passage. Removal of the polymer or plastic from the center region may be achieved with any suitable means, such as a carbon dioxide laser. In yet another approach, a ring of a polymeric material (e.g., PEEK) may be prefabricated and a filter is then pressed onto a side of the ring or into inside of the ring, wherein the filter and the ring are held together with compression fit or a similar mechanism. When the filter is pressed inside the polymeric ring, the filter will indent, albeit slightly, into the ring (due to compression force). In this manner, the peripheral region of the filter is considered to be "covered" in its peripheral region with the polymeric material.

Referring again to FIG. 2, the guard column 50 in this example is held inside the guard column housing 60 with the aid of a filter (frit) retainer 2. The filter (frit) retainer 2 helps to keep the filter element 3 properly situated at the end of the guard column body 4. In this example, only one filter retainer 2 is used at the top. In this description, the top and bottom are used with reference to the drawings as shown. However, one skilled in the art would appreciate that both filter elements 3 at the top and bottom of the guard body 4 may be held in place with the aid of filter retainers. Furthermore, one skilled in the art would also appreciate that a separate filter retainer 2 is not necessary. In some embodiments, the filter retainer 2 may be part of the guard column body, e.g., as an integral part of either the female guard housing 1 or the male guard housing 6. For example, the filter retainer 2 in FIG. 2 may be an integral part of the female guard housing 6.

FIG. 4 shows a state of a guard column when assembled. When the guard column 50 is assembled, the housing 60 (the female guard housing 1 and the male guard housing 6) is made up and exerts axial compression on the two ends of the guard column 50 (via frit/filter retainer 2 from the top and the capillary adaptor 5 from the bottom in the example shown in FIG. 2). In FIG. 4, the axial compression is illustrated as the block arrows. As a result of such axial compression, the top filter element 3 is pushed against the top end of the guard column body 4. More specifically, the peripheral region 3a of the top filter element 3 is pressed against the top end surface of the guard column body 4. Because the yield strength of the material in the peripheral region 3a is lower than the yield strength of the material of the guard column body 4, the compression will result in an indentation 33 in the peripheral region 3a of the filter element 3. The indentation 33 would allow the center filter region 3b to push a short distance (along the axial direction of the guard column) below the top end surface of the guard column body 4. This would reduce the volume of the chamber 12 that holds the packing material 8. As a result of this reduced volume, the packing material 8 would be under a compression force, which will prevent (or minimize) the formation of voids or movements of the packing materials.

A similar filter element (e.g., like the one shown in FIG. 3, having a center filter region 3b and a polymer peripheral region 3a) is used for the bottom filter. The same pushing and compression would also occur at the bottom end of the guard column to form a similar indentation 33 in the bottom filter element 3. The simultaneous compression from the top and bottom (as shown in FIG. 4) would exert substantial compression on the packing material 8 in the chamber 12 of the guard column. However, in accordance with some embodiments of the invention, a guard column may only have the top end or the bottom end having this compression on the packing material 8. In other words, embodiments of the invention encompass guard columns that may have top compression, bottom compression, or both top and bottom compression.

To facilitate the compression and indentation formation, the edge of the top end and bottom end of the guard column body 4 may be chamfered, on the inside edge and/or outside edge. For example, as shown in FIG. 4, the top end of the guard column body 4 is chamfered on the inside edge 48 and outside edge 49. The chamfers 48 and 49 make the top surface area on the top end of the guard column body 4 smaller and thus the same compression force would make a deeper indentation 33. One skilled in the art would appreciate that these chamfers are optional and may be made at inside and/or outside edges of either or both ends of the guard column body 4 in any combination - i.e., inside edge chamfer and/or outside edge chamfer at the top end and/or the bottom end. In the example shown in FIG. 4, the bottom edge also has an inside chamfer, but has no outside chamfer. Preferred embodiments of the invention include at least one inside chamfer.

In accordance with embodiments of the invention, a filter element 3 is designed to have the peripheral region 3a yield to the end of the guard column body 4 such that the center filter region 3b can push into the inside of the guard column by a short axial distance to compress the packing material in the guard column. In order to allow the center filter region 3b to push into the column, the dimensions of such filter element should be properly designed.

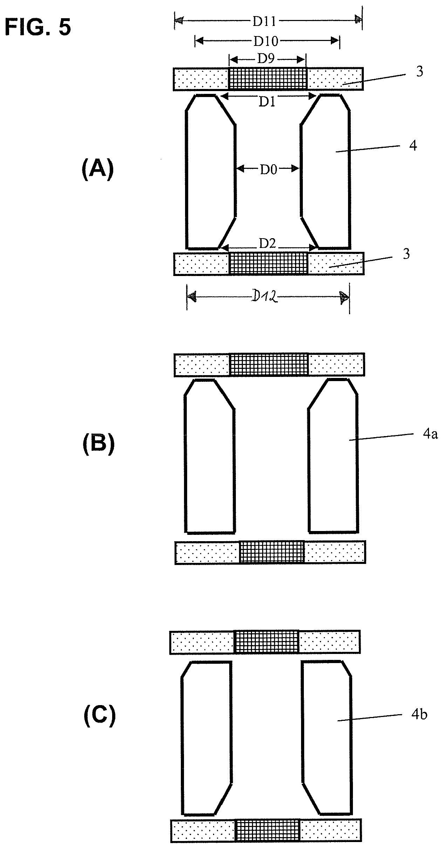

FIG. 5A shows a diagram illustrating various dimensions of a top filter element 3 and bottom filter element 3, relative to the dimensions of a guard column body 4. As shown, the center filter region 3b has a diameter D9 that is smaller than the inner diameter of the top end (D1) or bottom end (D2) of the guard column body 4 such that the center filter region 3b can be forced to enter the chamber holding the packing material. In addition, the outside diameter (D11) of the filter element 3 is preferably equal to or larger than the outside diameter (D10, D12) of the end of the guard column body 4 so that the filter element 3 can be properly seated at the ends of the guard column body 4.

As shown in FIG. 5A, the guard column body 4 has wider inner bore sections at both ends, as compared with the center section, due to inside chamfers. Specifically, the diameter at the top end (D1) and the diameter at the bottom end (D2) are larger than the diameter at the mid section (D0) of the guard column body 4. This preferred configuration allows the center filter region 3b of a filter element 3 to have a slightly larger diameter (D9) - because D9 needs to be smaller than D1 or D2, if D1 and/or D2 are larger (as compared to D0), then D9 can also be larger. This configuration can result in more packing material being compressed for the same distance of axial movement (into the column) of the center filter region 3b. When more packing material is compressed, the effects achieved can be more significant, because the volume decrease due to compression as a percentage of the overall chamber volume is slightly larger.

While having both ends enlarged (e.g., chamfered) would produce more compression effects, embodiments of the invention are not so limited. Instead, a guard column of the invention may have a guard column body 4 with only the top end enlarged (shown as guard column body 4a in FIG. 5B) or only the bottom end enlarged (shown as guard column body 4b in FIG. 5C). In addition, some guard column bodies 4 of the invention may not have any chamfer at either end - i.e., with straight center bores. Preferred embodiments of the invention would have at lest one end enlarged (e.g., by chamfering on an inside edge or having a larger bore), as shown in FIGs. 5A - 5C.

In accordance with some embodiments of the invention, a guard column body 4 may include one of the filters (e.g., the bottom filter) as an integral part of the guard column body 4. One example of this is shown in FIG. 6. In this example, the bottom frit 3c is fixedly attached to or formed as an integral part of the guard column body 4. Only the top filter element 3 would include a peripheral region 3a that comprises a polymeric material having a yield strength lower than the yield strength of the guard column body 4.

Some embodiments of the invention relate to methods for assembling a guard column described above. In accordance with a method of the invention, a guard column body 4 may be pre-assembled, together with the capillary adaptor 5 and connector 7 (or a similar connection mechanism), into the male housing 6. In the meantime, a slurry of the packing material in a suitable solvent (e.g., methanol, THF, or a mixture thereof) is prepared.

The semi-assembled guard column may be put on a suitable loading machine (see e.g., R.P.W. Scott in "Silica Gel and Bonded Phases," J. Wiley & Sons, Ltd., New York, 1993, page 63). Specifically, the loading station is prepared and cleaned prior to use. The pre-assembled guard column is connected to a chimney and a barrel via screw connections. The chimney with the guard column is placed into the loading station. Tighten the whip to the barrel and start the loading program.

Insert a filter element 3 into a filter retainer 2. After loading and decompression, unscrew the loaded guard column from the loading station and close the guard column top with the filter element 3 and the filter retainer 2. Put the female housing 1 on it. Put the guard column on a fixture and carefully close it with a torque wrench (e.g., with a suitable force for the desired application or what is specified for the preparation) to complete the assembly.

Advantages of embodiments of the invention may include one or more of the following. A guard column of the invention has the packing material under compression and would be less likely to develop problems due to disturbance of the packing materials either after packing or after use. As a result, a guard column of the invention would have longer useable lives and would have less undesired impact on the chromatography systems. These guard columns have broad applications; they can be used as guard columns for regular HPLC, fast LC (e.g., core shell particles) or UHPLC.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A guard column assembly (10) for chromatography, comprising:
a housing (60) comprising an inlet (9a) and an outlet (9b); and
a guard column (50) configured to be enclosed in the housing (60), wherein the guard column (50) comprises:
a tubular body (4) having an axial bore (11); and
a first filter and a second filter disposed at a first end and a second end of the tubular body (4) to define a chamber (12) for holding a packing material (8),
said guard column assembly being **characterized in that** the first filter comprises a disk-shaped filter element (3) having a peripheral region (3a) coated or covered with a polymeric material and a center filter region (3b) for fluid passage, wherein the disk-shaped filter element (3) has an outside diameter (D11) equal to or larger than an outside diameter (D10) of the first end of the tubular body (4) and the center filter region (3b) of the disk-shaped filter element (3) has a diameter (D9) smaller than an inside diameter (D1) of the first end of the tubular body (4), and
wherein the housing (60) encloses the guard column (50) in a manner that presses the first filter and the second filter, respectively, against the first end and the second end of the tubular body (4) such that the packing material (8) in the chamber (12) is compressed.

2. The guard column assembly (10) of claim 1, wherein the second filter comprises a filter element (3) having a peripheral region (3a) coated or covered with a polymeric material and a center filter region (3b) for fluid passage, wherein the filter element (3) has an outside diameter (D11) equal to or larger than an outside diameter (D12) of the second end of the tubular body (4) and the center filter region (3b) of the filter element (3) has a diameter (D9) smaller than an inside diameter (D2) of the second end of the tubular body (4).

3. The guard column assembly (10) of claim 1, wherein the second filter (3c) is fixedly attached to the second end of the tubular body (4).

4. The guard column assembly (10) of any of claims 1-3, wherein at least one of the first end and the second end of the tubular body (4) is chamfered on an inside edge (48) to have an inside diameter (D1, D2) larger than an inside diameter (D0) of a mid section of the tubular body (4).

5. The guard column assembly (10) of any of claims 1-4, wherein at least one of the first end and the second end of the tubular body (4) is chamfered on an outside edge (48).

6. The guard column assembly (10) of any of claims 1-5, further comprising at least one filter retainer (2) disposed between the housing (60) and at least one of the first filter and the second filter.

7. The guard column assembly (10) of claim 6, wherein the at least one filter retainer (2) is an integral part of the housing (60).

8. The guard column assembly (10) of any of claims 1-7, wherein the housing (60) comprises a female section (1) and a male section (6).

9. The guard column assembly (10) of claim 8, wherein the female section (1) and the male section (6) are connected by thread engagement or compress fit.

10. The guard column assembly (10) of any of claims 1-9, further comprising a connector at the outlet of the housing for attachment to a chromatography column.

11. A method for assembling a guard column assembly (10) for chromatography according to claim 1 or 2, comprising:
filling the tubular body (4) of the guard column (50) with the packing material (8) via a first end of the tubular body (4), while a second end of the tubular body (4) is closed by the second filter;
placing a first filter over the first end of the tubular body (4); and
assembling the housing (60) to enclose the guard column assembly (10) in a manner that the housing (60) presses the first filter against the first end of the tubular body (4) such that the packing material (8) in the chamber (12) is compressed.

12. The method of claim 11, wherein the housing (60) presses the second filter against the second end of the tubular body (4) to form a compressive contact.

## Patentansprüche

1. Vorsäulenaufbau (10) für die Chromatographie, umfassend:
ein Gehäuse (60), das einen Einlass (9a) und einen Auslass (9b) umfasst, und
eine Vorsäule (50), die so gestaltet ist, dass sie in dem Gehäuse (60) eingeschlossen ist, wobei die Vorsäule (50) umfasst:
einen röhrenförmigen Körper (4) mit einer axialen Bohrung (11) und
einen ersten Filter und einen zweiten Filter, die an einem ersten Ende und einem zweiten Ende des röhrenförmigen Körpers (4) angeordnet sind, um eine Kammer (12) zum Aufnehmen eines Füllmaterials (8) zu definieren,
wobei besagter Vorsäulenaufbau dadurch charakterisiert ist, dass der erste Filter ein scheibenförmiges Filterelement (3) mit einem Randbereich (3a), der mit einem Polymermaterial beschichtet oder bedeckt ist, und mit einem in der Mitte gelegenen Filterbereich (3b) für den Fluiddurchgang umfasst, wobei das scheibenförmige Filterelement (3) einen Außendurchmesser (D11) hat, der gleich oder größer als ein Außendurchmesser (D10) des ersten Endes des röhrenförmigen Körpers (4) ist und der in der Mitte gelegene Filterbereich (3b) des scheibenförmigen Filterelements (3) einen Durchmesser (D9) hat, der kleiner als ein Innendurchmesser (D1) des ersten Endes des röhrenförmigen Körpers (4) ist, und
wobei das Gehäuse (60) die Vorsäule (50) auf eine Weise umgibt, die den ersten Filter beziehungsweise den zweiten Filter gegen das erste Ende und das zweite Ende des röhrenförmigen Körpers (4) drückt, so dass das Füllmaterial (8) in der Kammer (12) komprimiert wird.

2. Vorsäulenaufbau (10) nach Anspruch 1, wobei der zweite Filter ein Filterelement (3) mit einem Randbereich (3a), der mit einem Polymermaterial beschichtet oder bedeckt ist, und einem in der Mitte gelegenen Filterbereich (3b) für den Fluiddurchgang umfasst, wobei das Filterelement (3) einen Außendurchmesser (D11) hat, der gleich oder größer als ein Außendurchmesser (D12) des zweiten Endes des röhrenförmigen Körpers (4) ist, und der in der Mitte gelegene Filterbereich (3b) des Filterelements (3) einen Durchmesser (D9) hat, der kleiner als ein Innendurchmesser (D2) des zweiten Endes des röhrenförmigen Körpers (4) ist.

3. Vorsäulenaufbau (10) nach Anspruch 1, wobei der zweite Filter (3c) fest am zweiten Ende des röhrenförmigen Körpers (4) befestigt ist.

4. Vorsäulenaufbau (10) nach einem der Ansprüche 1-3, wobei mindestens eines des ersten Endes und des zweiten Endes des röhrenförmigen Körpers (4) an einer Innenkante (48) abgeschrägt ist, um einen Innendurchmesser (D1, D2) aufzuweisen, der größer als ein Innendurchmesser (D0) eines mittleren Abschnitts des röhrenförmigen Körpers (4) ist.

5. Vorsäulenaufbau (10) nach einem der Ansprüche 1-4, wobei mindestens eines des ersten Endes und des zweiten Endes des röhrenförmigen Körpers (4) an einer Außenkante (48) abgeschrägt ist.

6. Vorsäulenaufbau (10) nach einem der Ansprüche 1-5, ferner mindestens eine Filterhalterung (2) umfassend, die zwischen dem Gehäuse (60) und mindestens einem des ersten Filters und des zweiten Filters angeordnet ist.

7. Vorsäulenaufbau (10) nach Anspruch 6, wobei die mindestens eine Filterhalterung (2) ein integraler Teil des Gehäuses (60) ist.

8. Vorsäulenaufbau (10) nach einem der Ansprüche 1-7, wobei das Gehäuse (60) einen weiblichen Abschnitt (1) und einen männlichen Abschnitt (6) aufweist.

9. Vorsäulenaufbau (10) nach Anspruch 8, wobei der weibliche Abschnitt (1) und der männliche Abschnitt (6) durch Gewindeeingriff oder Quetschverschraubung miteinander verbunden sind.

10. Vorsäulenaufbau (10) nach einem der Ansprüche 1-9, ferner einen Konnektor am Auslass des Gehäuses zum Anschluss an eine Chromatographiesäule umfassend.

11. Verfahren zum Zusammenbauen eines Vorsäulenaufbaus (10) für die Chromatographie gemäß Anspruch 1 oder 2, umfassend:
Füllen des röhrenförmigen Körpers (4) der Vorsäule (50) mit dem Füllmaterial (8) über ein erstes Ende des röhrenförmigen Körpers (4), während ein zweites Ende des röhrenförmigen Körpers (4) durch den zweiten Filter verschlossen ist,
Anbringen eines ersten Filters über dem ersten Ende des röhrenförmigen Körpers (4) und
Zusammenbauen des Gehäuses (60) zum Umschließen des Vorsäulenaufbaus (10) auf eine Weise, dass das Gehäuse (60) den ersten Filter gegen das erste Ende des röhrenförmigen Körpers (4) drückt, so dass das Füllmaterial (8) in der Kammer (12) komprimiert wird.

12. Verfahren nach Anspruch 11, wobei das Gehäuse (60) den zweiten Filter gegen das zweite Ende des röhrenförmigen Körpers (4) drückt, um einen Druckkontakt zu bilden.

## Revendications

1. Ensemble de colonne de garde (10) pour chromatographie, comprenant:
un logement (60) comprenant une entrée (9a) et une sortie (9b); et
une colonne de garde (50) configurée pour être confinée dans le logement (60), la colonne de garde (50) comprenant:
un corps tubulaire (4) présentant un alésage axial (11); et
un premier filtre et un second filtre disposés à une première extrémité et à une seconde extrémité du corps tubulaire (4) pour définir une chambre (12) destinée à contenir un matériau de garnissage (8),
ledit ensemble de colonne de garde étant **caractérisé en ce que** le premier filtre comprend un élément filtrant en forme de disque (3) comportant une zone périphérique (3a) revêtue ou recouverte d'un matériau polymère et une zone centrale de filtre (3b) pour le passage de fluide, dans lequel l'élément filtrant en forme de disque (3) a un diamètre extérieur (D11) égal ou supérieur au diamètre extérieur (D10) de la première extrémité du corps tubulaire (4) et de la zone de filtre centrale (3b) de l'élément filtrant en forme de disque (3) a un diamètre (D9) inférieur à un diamètre intérieur (D1) de la première extrémité du corps tubulaire (4), et
dans lequel le logement (60) entoure la colonne de garde (50) de manière à appliquer le premier filtre et le second filtre, respectivement, contre la première extrémité et la seconde extrémité du corps tubulaire (4), de sorte que le matériau de garnissage (8) dans la chambre (12) est comprimé.

2. Ensemble de colonne de garde (10) selon la revendication 1, dans lequel le second filtre comprend un élément filtrant (3) présentant une zone périphérique (3a) revêtue ou recouverte d'un matériau polymère et une zone centrale (3b) pour le passage de fluide, dans lequel l'élément filtrant (3) a un diamètre extérieur (D11) égal ou supérieur au diamètre extérieur (D10) de la seconde extrémité du corps tubulaire (4) et de la zone de filtre centrale (3b) de l'élément filtrant (3) a un diamètre (D9) inférieur à un diamètre intérieur (D1) de la seconde extrémité du corps tubulaire (4).

3. Ensemble de colonne de garde (10) selon la revendication 1, dans lequel le second filtre (3c) est fixé à demeure à la seconde extrémité du corps tubulaire (4).

4. Ensemble de colonne de garde (10) selon l'une quelconque des revendications 1 à 3, dans lequel au moins l'une des première et seconde extrémités du corps tubulaire (4) est chanfreinée sur un bord intérieur (48) pour avoir un diamètre intérieur (D1, D2) plus grand que le diamètre intérieur (D0) d'une section médiane du corps tubulaire (4).

5. Ensemble de colonne de garde (10) selon l'une quelconque des revendications 1 à 4, dans lequel au moins l'une des première et seconde extrémités du corps tubulaire (4) est chanfreinée sur un bord extérieur (48).

6. Ensemble de colonne de garde (10) selon l'une quelconque des revendications 1 à 5, comprenant en outre au moins un élément de retenue de filtre (2) disposé entre le logement (60) et au moins l'un du premier filtre et du second filtre.

7. Ensemble de colonne de garde (10) selon la revendication 6, dans lequel ledit au moins un dispositif de retenue de filtre (2) fait partie intégrante du logement (60).

8. Ensemble de colonne de garde (10) selon l'une quelconque des revendications 1 à 7, dans lequel le logement (60) comprend une section femelle (1) et une section mâle (6).

9. Ensemble de colonne de garde (10) selon la revendication 8, dans lequel la section femelle (1) et la section mâle (6) sont connectées par engagement de filetage ou ajustement par compression.

10. Ensemble de colonne de garde (10) selon l'une quelconque des revendications 1 à 9, comprenant en outre un connecteur à la sortie du logement pour fixation à une colonne de chromatographie.

11. Procédé d'assemblage d'un ensemble de colonne de garde (10) pour chromatographie selon les revendications 1 ou 2, comprenant les opérations suivantes:
remplir le corps tubulaire (4) de la colonne de garde (50) avec le matériau de garnissage (8) par une première extrémité du corps tubulaire (4), tandis qu'une seconde extrémité du corps tubulaire (4) est fermée par le second filtre;
placer un premier filtre sur la première extrémité du corps tubulaire (4); et
assembler le logement (60) pour enfermer l'ensemble de colonne de garde (10) de manière à ce que le logement (60) comprime le premier filtre contre la première extrémité du corps tubulaire (4) de sorte que le matériau de garnissage (8) se trouvant dans la chambre (12) est comprimé.

12. Procédé selon la revendication 11, dans lequel le logement (60) comprime le second filtre contre la seconde extrémité du corps tubulaire (4) pour former un contact en compression.
